# EUROPÄISCHE PATENTANMELDUNG

(11) **EP 1 065 038 A1**
(43) Veröffentlichungstag der Anmeldung: **03.01.2001**
(21) Anmeldenummer: 00111835.5
(22) Anmeldetag: 07.06.2000
(51) Int. Cl.: B29C 47/00, B29C 47/54, B29C 47/80

(54) **Verfahren und Vorrichtung zum Aufheizen und Herstellen von faserverstärkten Kunststoffmassen zu einem Plastifikatstrang**

(30) Priorität: 09.06.1999 DE 19926178
(71) Anmelder: Maschinenfabrik J. Dieffenbacher GmbH & Co., 75031 Eppingen (DE)
(72) Erfinder: Brüssel, Richard, 75056 Sulzfeld (DE)
(74) Vertreter: Hartdegen, Anton

(57) **Zusammenfassung**

Die Erfindung bezieht sich auf ein Verfahren zum Aufheizen und Herstellen von faserverstärkten Kunststoffmassen zu einem Plastifikatstrang und betrifft auch eine Vorrichtung zur Durchführung dieses Verfahrens. Die Erfindung besteht für das Verfahren darin, daß in mehreren von beheizten Platten gebildeten Kanälen Stäbchengranulat oder anderes faserverstärktes Kunststoffmaterial zyklisch zugegeben und nach dem Aufschmelzen mit einer neuen zugeführten Füllung aus einer Düse zu einem Plastifikatstrang herausgedrückt wird. Die Vorrichtung zur Durchführung des Verfahrens besteht aus einem Heizplatten-Plastifikator (1) mit Aufheizgehäuse (2), bestehend aus mehreren zueinander beabstandeten und damit Kanäle (a, b, c, d, e) bildenden Heizplatten (3, 4, 5), einem Zuführbereich bzw. Materialeingang (6) mit darin beweglichen Stopfkolben (7) und einem von einer beheizbaren Abschlußplatte begrenzten Ausgangsbereich (9) mit Austragsdüse (10).

## Beschreibung

Die Erfindung bezieht sich auf ein Verfahren zum Aufheizen und Herstellen von faserverstärkten Kunststoffmassen zu einem Plastifikatstrang gemäß Oberbegriff des Anspruchs 1 und auf eine Vorrichtung zur Durchführung des Verfahrens gemäß dem Oberbegriff des Anspruchs 5.

Zunehmend werden lang-faserverstärkte Thermoplaste in Form von Stäbchengranulaten als Halbzeug angeboten und mit der Plastifikat-Technologie zu Formteilen gepreßt. Dazu werden Einschneckenplastifizierer im Spritzgießmaschinenprinzip verwendet. Diese Einschneckenplastifizierer haben die Aufgabe die Stäbchengranulate schonend aufzuschmelzen, damit die Fasern möglichst wenig gebrochen und zu Feinanteil zermahlen werden. Die Faserlänge entspricht hierbei der Stäbchenlänge des Halbzeugs Granulats.

Wenn diese Einschneckenplastifizierer das Plastifikat direkt in die offene Kavität einlegen spricht man vom Strangablegeverfahren. Um das schonende Aufschmelzen zu erreichen wurden Maschinen mit großem Schneckendurchmesser und großer Länge eingeführt. Der Hauptgrund für diese Tatsache liegt darin, daß mit geringen Drehzahlen, also mit sehr wenig Scherenergie, das Material aufgeschmolzen und als Plastifikatstrang ausgetragen werden kann. Mit diesen Maschinen wird das Faserpotential beim Plastifizieren der Stäbchengranulate nur geringfügig geschädigt. Die Preßteilgewichte und die möglichen kurzen Zykluszeiten erfordern aber deutlich größere Plastifizierleistungen, als dies mit den Einschnecken-Plastifizierern bei geringer Faserschädigung möglich wäre.

Der Erfindung liegt nun die Aufgabe zugrunde, ein Verfahren und eine dazugehörige Vorrichtung zu schaffen, womit die Scherenergie auf die Fasern bei hoher Plastifizierleistung gering bleibt, um somit das Faserpotential in den Halbzeugstäbchen Granulat nicht zu schädigen.

Diese Aufgabe wird dadurch gelöst, daß in mehreren von beheizten Platten gebildeten Kanälen Stäbchengranulat oder anderes faserverstärktes Kunststoffmaterial zyklisch zugegeben und nach dem Aufschmelzen mit einer neuen zugeführten Füllung aus einer Düse zu einem Plastifikatstrang herausgedrückt wird.

Für die Vorrichtung wird die ihr gestellte Aufgabe für das Verfahren mit einem Heizplatten-Plastifikator mit Aufheizgehäuse, bestehend aus mehreren zueinander beabstandeten und damit Kanäle bildenden Heizplatten, einem Zuführbereich bzw. Materialeingang mit darin beweglichen Stopfkolben und einem von einer beheizbaren Abschlußplatte begrenzten Ausgangsbereich mit Austragsdüse, gelöst.

Im oberen Zuführbereich eines Heizplattenplastifikators wird das kalte Material zyklisch gewichtsdosiert zugegeben und von einem Stopfkolben durch die Kanäle gedrückt. Das aufgeschmolzene Plastifikat kommt dabei zyklisch aus einer Austragsdüse entsprechend dem zudosierten Gewicht. Die Kanäle sind dafür so bemessen, daß in Abhängigkeit von der Kanaldicke das Material ausreichend Zeit hat aufzuschmelzen, bevor es als Plastifikatstrang herausgefördert wird. Um nun die erforderliche Plastifizierleistung zu erhalten werden entsprechend viele Flachplastifizierkanäle parallel geschaltet. Dadurch, daß diese Kanäle unten im plastifizierten Zustand des Materials wieder miteinander verbunden sind, müssen im gemeinsamen oberen Dosierraum bzw. Zuführbereich die einzelnen Kanäle nicht einzeln genau dosiert werden. Das Gesamtsystem verhält sich ähnlich 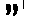 kommunizierender Röhren" und gleicht damit geringe Einzelkanal-Dosierfehler aus.

Ein weiterer Vorteil dieses Systems ist, daß das Verhältnis von dem Schüttgewicht des zugeführten Materials zu dem spezifischen Gewicht des plastifizierten Materials durch den Hub des Stopfkolbens geregelt wird und in einem Plastifizierkanal das Material entsprechend dem Plastifiziergrad den Raum ohne Überdruck oder zusätzliche Hohlräumen ausfüllt. Dazu kommt noch, daß die Kanaldicke auch im Zuführbereich relativ geringe Maße aufweist, wodurch das Einsatzmaterial schneller aufheizt. Damit wird auch erreicht, daß die Materialmenge, welche den Platten-Plastifikator füllt, relativ gering ist. Bei den bekannten Einschnecken-Plastifizierern kann die Schneckengeometrie betreffend dem Schüttgewicht und Plastifikatdichte nur für einen Materialtyp und eine Plastifizierleistung optimal ausgelegt werden. Der Heizplattenplastifikator gemäß der Erfindung arbeitet dagegen für jedes Verhältnis des Schüttgewichts zur Plastifikatdichte und für jede gewählte Plastifizierleistung im optimalen Bereich.

Da die Flachplastifizierkanäle im Verhältnis zu den Einschnecken-Plastifizierern sehr kurz sind und pro Zyklus der Stopfkolben oben zur zyklischen Dosierung abhebt, ergibt sich über die vorhandenen Hohlräume und Kanäle zwischen den teils angeschmolzenen Stäbchengranulaten, Recyclatchips oder dem Kunststoffgranulat eine systembedingte Entgasung des zu plastifizierenden Materials. Mit diesem Platten-Plastifikator ergibt sich entsprechend der Kanalbreite, welche ein vielfaches des Schneckendurchmessers sein kann, ein problemloses Austragen von breiten Plastifikatsträngen.

Mit den parallel geschalteten Flachplastifizierkanälen ergibt sich weiter die Möglichkeit zur Sandwich-Plastifikat-Herstellung. Dies kann bedeuten, daß im Kern bevorzugt Recyclatware verwendet wird. Damit muß an das Recyclat keine so hohen Materialanforderungen gestellt werden. Ferner besteht die Möglichkeit, daß an der Oberfläche mit unverstärkten Schichten gearbeitet wird um bessere Oberflächen zu erhalten. Zusätzlich können die Plastifizierkanäle in der Breite noch unterteilt werden, um so den Plastifikatquerschnitt mit unterschiedlichen Materialien zu gestalten. Durch die Verwendung von mehreren Stopfkolben und einzeln geregelten Hüben können zyklisch voreilende oder nachströmende Schichten erzeugt werden. Die Vielseitenzugänglichkeit der Materialeinbringung erlaubt die Dosierung der einzelnen Stopfzylinderbereiche mit unterschiedlichem Material parallel in kurzer Zeit. Die Kanaldicke kann dabei in Abhängigkeit der spezifischen Granulat- oder Chipgeometrie und/oder des Schüttgewichtes unterschiedlich sein. Die untere Zusammenführung der Schmelzen aus den Plastifizierkanälen kann abweichend von einem rechten Winkel erfolgen, das heißt es kann vorteilhaft sein im Ausgangsbereich die Austragsdüse schräg auszuführen. Der Endbereich der Plastifizierkanäle können weiter mit auswechselbaren Einsätzen versehen sein, um so den Erfordernissen der Faserdispergierung den Fließwiderstand anzupassen

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: den Heizplatten-Plastifikator gemäß der Erfindung in einem Schnitt und in Seitenansicht mit fünf Kanälen,
- Figur 2: den Heizplatten-Plastifikator nach Figur 1 in Draufsicht ohne Stopfkolben,
- Figur 3: in vereinfachter Darstellung mit drei Kanälen zwei Materialeingänge A und B des Aufheizgehäuses in Seitenansicht und Schnitt,
- Figur 4: den unteren Teil des Aufheizgehäuses mit Austragkanal nach Figur 3,
- Figur 5: in Draufsicht ein Aufheizgehäuse mit vier Kanälen und den Materialeingang für zwei Materialien ausgebildet zur Herstellung eines Plastifikatstranges bestehend aus einem Kern mit Ummantelung,
- Figur 6: den unteren Teil eines Aufheizgehäuses mit drei Kanälen und schräger Ausbildung des Austragkanals in Seitenansicht und Schnitt und
- Figur 7: in einem Schnitt und Draufsicht nach Figur 6 einen Kanal mit Einsatz.

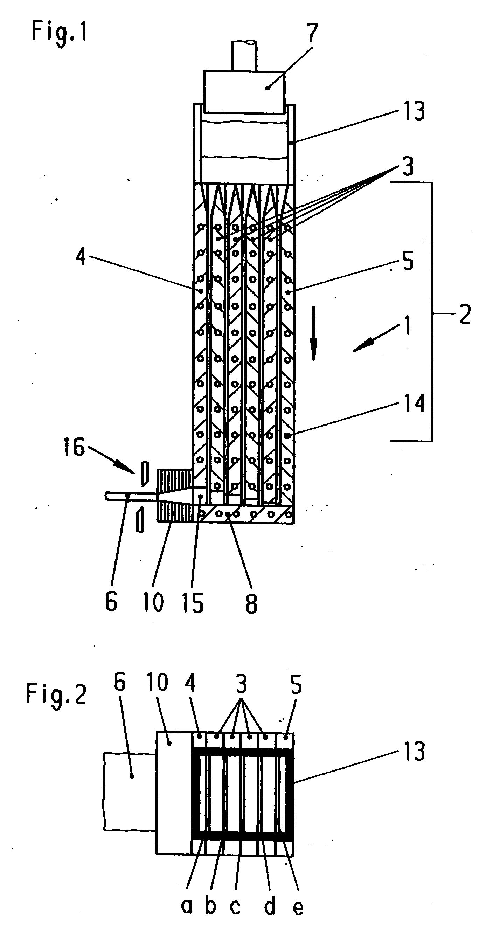

Die Figur 1 zeigt im Schnitt und Seitenansicht den Heizplatten-Plastifikator 1 zur Durchführung des Verfahrens gemäß der Erfindung mit Aufheizgehäuse 2, das in senkrechter Anordnung vier innere Heizplatten 3 und zwei äußere Heizplatten 4 und 5 durch fünf Kanäle a, b, c, d und e beabstandet aufweist. Am Aufheizgehäuse 2 ist oben der Materialeingang 13 angebracht, aus dem zyklisch ein Stopfkolben 7 das eingebrachte Material in die Kanäle a bis e drückt. Der untere Teil des Aufheizgehäuses 2 mit den Kanälen a bis e wird von einer beheizbaren Abschlußplatte 8 abgeschlossen, die gleichzeitig den Austragkanal 15 begrenzt. In die Heizplatten 3, 4, 5 und die Abschlußplatte 8 sind zur Durchleitung von Heizmedium Heizbohrungen 14 eingebracht. Für den reibungslosen Austrag der Plastifikatstränge 6 sind die Heizplatten 3 und 4 den Austragkanal 15 verbreiternd nach oben verkürzt ausgebildet. Der Austragkanal 15 mündet in die Austragsdüse 10, die den Plastifikatstrang 6 mit einer bestimmbaren Form austrägt und einer Schneideinrichtung 16 zuführt. Die Figur 2 zeigt den Heizplatten-Plastifikator 1 in Draufsicht ohne Stopfkolben 7.

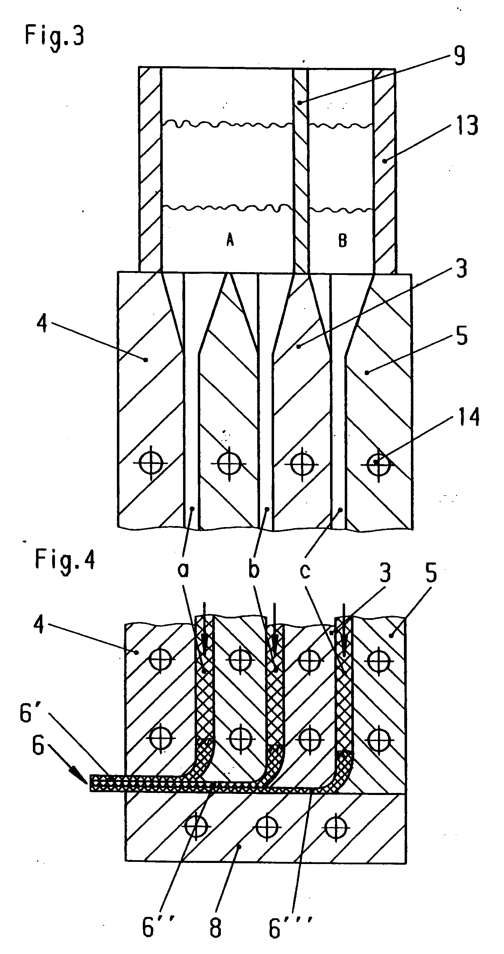

Zum Plastifizieren von zwei verschiedenen Materialien und Herstellung eines Sandwich-Plastifikatstranges 6 zeigen die Figuren 3 und 4 die Ausbildung des Aufheizgehäuses 2 mit einer inneren Trennwand 9 im Materialeingang 13. Die Figur 4 zeigt die Trennwand 9 als Zuführbegrenzung des Materials A für zwei Kanäle a und b und des Materials B für einen Kanal c, während nach Figur 3 zwei Trennwände 9 im Materialeingang 13 angeordnet sind, die zur Bildung dreier verschiedener Plastifikatstränge 6', 6'', 6''', im Austragkanal 15 zu einem Plastifikatstrang 6 zusammengeführt werden.

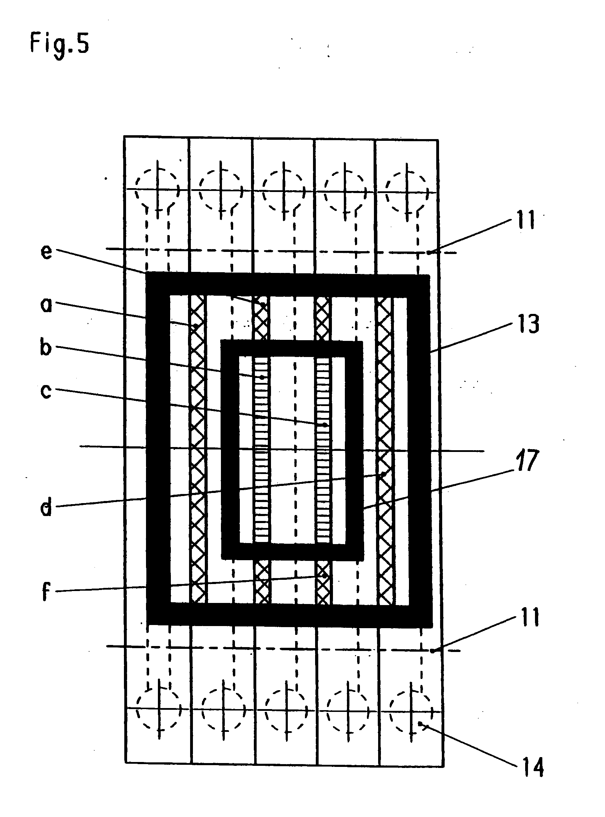

In Figur 5 ist in einer Draufsicht auf das Aufheizgehäuse 2 dargestellt, wie sich durch die Anordnung eines Viereckrohres 17 im Materialeingang 13 ein Plastifikatstrang 6 mit Kern und Ummantelung aus zwei verschiedenen Materialien herstellen läßt. Mit 11 sind Zuganker aufgezeigt für die wahlweise Zusammenfügung der Heizplatten 3, 4 und 5 mit einem oder mehreren Kanälen a bis e.

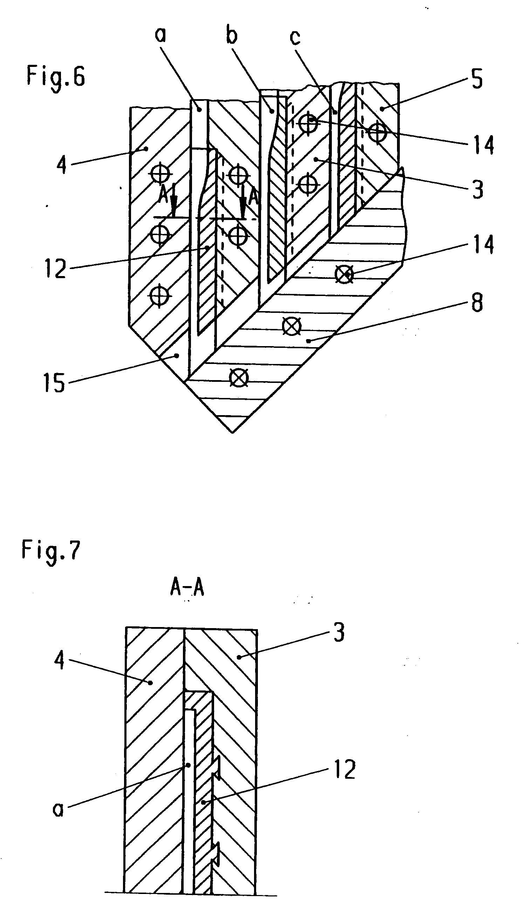

Die Figuren 6 und 7 zeigen die schräge Anordnung des Austragkanals 15 und die Möglichkeit den Entleerbereich mit auswechselbaren Einsätzen 12 variabel zu gestalten.

### Bezugszeichenliste

- 1.: Heizplatten-Plastifikator
- 2.: Aufheizgehäuse
- 3.: Heizplatten
- 4.: äußere Heizplatte
- 5.: äußere Heizplatte
- 6.: Plastifikatstrang 6', 6'', 6'''
- 7.: Stopfkolben
- 8.: Abschlußplatte
- 9.: Trennwände
- 10.: Austragsdüse
- 11.: Zuganker
- 12.: Einsatz
- 13.: Materialeingang
- 14.: Heizbohrungen
- 15.: Austragkanal
- 16.: Schneideinrichtung
- 17.: Viereckrohr
- a, b, c, d ...: Kanäle

## Patentansprüche

1. Verfahren zum Aufheizen und Herstellen von faserverstärkten Kunststoffmassen zu einem Plastifikatstrang, **dadurch gekennzeichnet**, daß in mehreren von beheizten Platten gebildeten Kanälen Stäbchengranulat oder anderes faserverstärktes Kunststoffmaterial zyklisch zugegeben und nach dem Aufschmelzen mit einer neuen zugeführten Füllung aus einer Düse zu einem Plastifikatstrang herausgedrückt wird.

2. Verfahrennach Anspruch 1, **dadurch gekennzeichnet**, daß das Stäbchengranulat oder das faserverstärkte Kunststoffmaterial gewichtsdosiert den Kanälen zugeführt wird.

3. Verfahren nach den Ansprüchen 1 und 2, **dadurch gekennzeichnet**, daß das Verhältnis von dem Schüttgewicht des zugeführten Materials zum spezifischen Gewicht des plastifizierten Materials durch den Hub des Stopfkolbens geregelt wird.

4. Verfahren nach den Ansprüchen 1 bis 3, **dadurch gekennzeichnet**, daß durch im Zuführbereich mehrere getrennte Materialeingänge für unterschiedliche Materialien Sandwich-Plastifikatstränge oder Plastifikatstränge mit Kern- und Ummantelungsstruktur hergestellt werden.

5. Vorrichtung zur Durchführung des Verfahrens nach Anspruch 1 **gekennzeichnet durch** einen Heizplatten-Plastifikator (1) mit Aufheizgehäuse (2), bestehend aus mehreren zueinander beabstandeten und damit Kanäle (a, b, c, d, e) bildenden Heizplatten (3, 4, 5), einem Zuführbereich bzw. Materialeingang (6) mit darin beweglichen Stopfkolben (7) und einem von einer beheizbaren Abschlußplatte begrenzten Ausgangsbereich (9) mit Austragsdüse (10).

6. Vorrichtung nach Anspruch 5, **dadurch gekennzeichnet**, daß das Aufheizgehäuse (2) im Betrieb senkrecht angeordnet ist.

7. Vorrichtung nach den Ansprüchen 5 und 6, **dadurch gekennzeichnet**, daß die Länge, Breite und Dicke der Kanäle (a, b, c, d, ...) in Abhängigkeit von der Aufschmelzzeit des Materials ausgeführt ist.

8. Vorrichtung nach den Ansprüchen 5 bis 7, **dadurch gekennzeichnet**, daß mehrere Stopfkolben (7) mit unterschiedlichen Querschnitten zu entsprechend ausgebildeten Kanälen (a, b, c, d ....) vorgesehen sind.

9. Vorrichtung nach den Ansprüchen 5 bis 8, **dadurch gekennzeichnet**, daß der Austragkanal (15) schräg ausgeführt ist.

10. Vorrichtung nach den Ansprüchen 5 bis 9, **dadurch gekennzeichnet**, daß der Entleerbereich der Kanäle (a, b, c, d ....) mit auswechselbaren Einsätzen (17) ausgebildet ist.
